**Europäisches Patentamt**

**European Patent Office**

**Office européen des brevets**

(19)

(11) Veröffentlichungsnummer: **0 020 599**
**B1**

(12) # EUROPÄISCHE PATENTSCHRIFT

(45) Veröffentlichungstag der Patentschrift :
19.05.82

(51) Int. Cl.³ : **F 16 L 58/18**

(21) Anmeldenummer : **79901570.6**

(22) Anmeldetag : **03.11.79**

(86) Internationale Anmeldenummer :
**PCT/EP 79/00086**

(87) Internationale Veröffentlichungsnummer :
**WO WO/80009 (15.05.80 Gazettee 80/11)**

(54) ISOLIERMANSCHETTE ZUM ÜBERDECKEN DES VERBINDUNGSBEREICHES EINER ROHRMUFFE MIT EINEM EINGEFÜGTEN ROHRSCHAFT.

(30) Priorität : 08.11.78 DE 7833142 U
18.05.79 DE 2920136

(43) Veröffentlichungstag der Anmeldung :
07.01.81 (Patentblatt 81/01)

(45) Bekanntmachung des Hinweises auf die Patenterteilung : 19.05.82 Patentblatt 82/20

(84) Benannte Vertragsstaaten :
AT CH DE FR GB SE

(56) Entgegenhaltungen :
DE - A - 2 456 564
DE - A - 2 609 438
DE - B - 1 256 005
DE - U - 7 721 671
US - A - 2 416 618
US - A - 4 076 283

(73) Patentinhaber : Buderus Aktiengesellschaft
Sophienstrasse 32-34
D-6330 Wetzlar (DE)

(72) Erfinder : NÖH, Horst
Berliner Ring 45
D-6330 Wetzlar (DE)
Erfinder : REEH, Kurt
Lerchenweg 8
D-S300 Wettenberg (DE)
Erfinder : SCHEFFER, Helmut
Buderusstr. 2,
D-6336 Solms (DE)

(74) Vertreter : Benner, Alwin, Dipl.-Ing.
Buderus Aktiengesellschaft ZA-Patentabteilung Postfach 1220
D-6330 Wetzlar (DE)

shaft (1), a collar (9) overlapping the face of the pipe-joint socket (3), and a connecting part (10) positioned immediately next to the coated joint (3), thereby characterised, in that the collar (9), in longitudinal section, is in the form of an S-shaped membrane, with one bend having a wide-radius curve and the other bend having a narrow-radius curve (9' 9").

2. Insulating lining according to Claim 1, thereby characterised, in that the narrow-radius curve (9") opens out into the connecting part (8) positioned immediately next to the coated pipe-shaft (1), and the wide-radius curve (9') opens out into the connecting part (10) positioned immediately next to the coated joint (3).

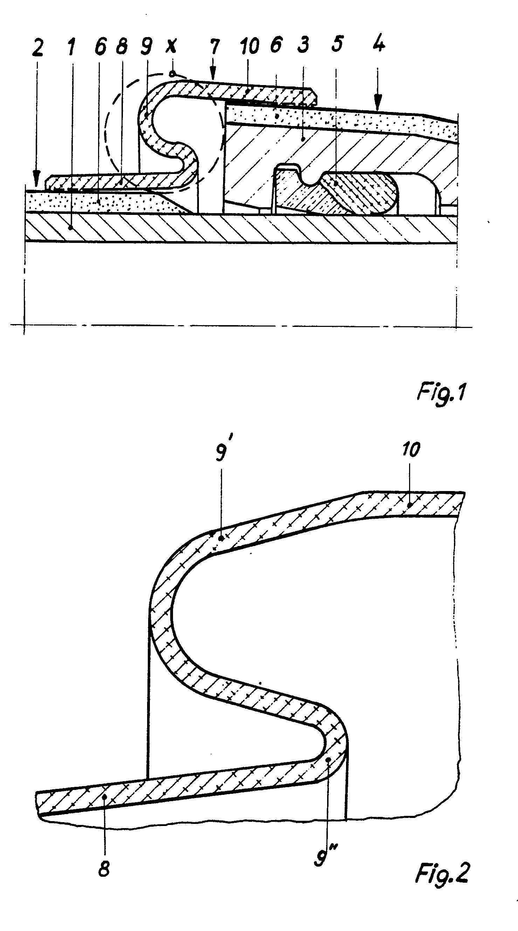

**Revendications**

1. Manchon d'isolement (7) pour recouvrir la zone de jonction d'une tulipe (3) et du corps (1) d'un tube qui y est emboîté, ces deux éléments présentant chacun une couche externe (6) de protection anti-corrosion, le manchon comprenant une allonge tubulaire (8) légèrement conique et appliquée hermétiquement sur le corps (1) revêtu du tube, un coude (9) emprisonnant la face extrême de ladite tulipe (3), ainsi qu'une allonge tubulaire (10) appliquée hermétiquement sur ladite tulipe revêtue (3), et étant caractérisé par le fait que le coude (9) est conformé en une membrane présentant en coupe longitudinale la forme d'un S et comportant un grand et un petit plis de dilatation (9', 9").

2. Manchon d'isolement selon la revendication 1, caractérisé par le fait que le petit pli de dilatation (9") se raccorde à l'allonge tubulaire (8) reposant sur le corps revêtu (1) du tube, le grand pli de dilatation (9') se raccordant à l'allonge tubulaire (10) appliquée sur la tulipe revêtue (3).

Fig.1

Fig.2